## Europäisches Patentamt
## European Patent Office
## Office européen des brevets

(19) 

(11) Numéro de publication: **0 124 410**
**B1**

(12) 

# FASCICULE DE BREVET EUROPÉEN

(45) Date de publication du fascicule du brevet:
26.11.86

(51) Int. Cl.⁴: **B 60 K 15/04**

(21) Numéro de dépôt: **84400740.1**

(22) Date de dépôt: **13.04.84**

(54) **Mécanisme de trappe à essence pour véhicule automobile.**

(30) Priorité: **14.04.83 FR 8306086**

(43) Date de publication de la demande:
**07.11.84 Bulletin 84/45**

(45) Mention de la délivrance du brevet:
**26.11.86 Bulletin 86/48**

(84) Etats contractants désignés:
**BE DE FR GB IT SE**

(56) Documents cité:
**EP-A-0 030 531**
**GB-A-925 577**
**GB-A-1 077 838**
**US-A-2 606 772**
**US-A-2 865 653**

(73) Titulaire: **REGIE NATIONALE DES USINES RENAULT, Boîte postale 103 8-10 avenue Emile Zola, F-92109 Boulogne- Billancourt (FR)**

(72) Inventeur: **Bettray, Guy, 15, Boulevard Lefèbvre, F-75015 Paris (FR)**

(74) Mandataire: **Kohn, Philippe, Régie Nationale des Usines Renault- S.0804, F-92109 Boulogne Billancourt Cedex (FR)**

LIBER, STOCKHOLM 1986

## Description

La présente invention a pour objet un mécanisme de trappe à essence pour véhicule automobile comprenant un portillon articulé sur la carrosserie du véhicule, dont il masque en position fermée une portion emboutie prévue pour recevoir un bouchon de réservoir, au moyen d'un dispositif d'articulation à deux positions privilégiées correspondant aux positions ouverte et fermée du portillon dans lesquelles ce dernier est maintenu en position par un élément élastique exerçant une contrainte sur ledit dispositif d'articulation. Un tel mécanisme est connu par EP-A-30 531.

Dans le but d'alléger les véhicules, les constructeurs automobiles cherchent à réaliser de nombreux composants du véhicule en matière plastique. C'est notamment le cas des mécanismes de trappe à essence du type mentionné ci-dessus. On a déjà proposé un mécanisme dans lequel le portillon en plastique comporte une articulation en forme de col de cygne, venue de matière avec le portillon, dont l'extrémité libre est munie d'un axe dont les extrémités sont emboîtées à force dans le corps d'une bride de fixation qui est fixée à l'intérieur de la portion emboutie de la carrosserie. Cette solution présente un premier inconvénient dû à l'encombrement en profondeur que nécessite l'articulation en col de cygne. Un second inconvénient est dû à la nécessité de fixer la bride sur le flanc latéral de la portion emboutie qui n'est généralement pas plane et peu facilement accessible pour un montage rapide du mécanisme sur le véhicule ; de plus les trous pour la fixation de la bride doivent être formés dans le flanc latéral ce qui nécessite au moins deux opérations lors de la réalisation de la portion emboutie. Par ailleurs, dans ce mécanisme, l'élément élastique est constitué par le corps de la bride elle même avec lequel l'extrémité du col de cygne coopère par déformation élastique du matériau plastique de la bride. Une telle réalisation ne procure aucune assurance quant à la valeur de la contrainte élastique exercée tant lors du montage d'origine qu'en raison de l'usure des éléments coopérant.

Afin de remédier à ces inconvénients, la présente invention propose un mécanisme de trappe à essence caractérisé en ce que le dispositif d'articulation comprend un coulisseau dont une extrémité est articulée au moyen d'un axe sur le portillon et dont le corps est reçu en coulissement dans un fourreau de guidage fixé sur ladite portion emboutie de la carrosserie au moyen d'une bride de fixation et s'étendant à l'intérieur de la carrosserie, lesdites deux positions privilégiées étant définies par la coopération des profils en vis à vis d'une première came formée sur le portillon et d'une seconde came formée sur la bride de fixation, ledit élément élastique étant disposé entre le portillon et le coulisseau pour solliciter lesdits profils en contact mutuel.

Selon une autre caractéristique de l'invention, la bride de fixation est fixée sur une partie plane de ladite portion emboutie qui s'étend dans un plan parallèle à celui de la carrosserie environnante, le profil de ladite première came comportant un premier méplat, formant un angle d'environ 45° avec le plan du portillon, qui coopère avec un second méplat formé sur le profil de ladite seconde came et qui fait avec le plan de la bride de fixation un angle d'environ 45°, pour définir la position fermée du portillon.

On décrira maintenant en détail un mode de réalisation d'un mécanisme de trappe à essence réalisé conformément aux enseignements de la présente invention, en se référant aux dessins annexés dans lesquels:
- la figure 1 est une vue en élévation d'une trappe à essence réalisée conformément aux enseignements de la présente invention, et de son implantation sur une portion de carrosserie de véhicule automobile, en position fermée;
- la figure 2 est une vue en coupe d'un détail selon la ligne 2-2 de la figure 1;
- la figure 3 est une vue partielle, en coupe selon la ligne 3-3 de la trappe de la figure 1;
- la figure 4 est une vue en coupe selon la ligne 4 - 4 de la figure 3;
- la figure 5 est une vue en élévation selon la flèche 5 de la figure 6 dans laquelle la trappe est représentée en position ouverte ; et
- la figure 6 est une vue en élévation selon la flèche 6 de la figure 5 dans laquelle la trappe est en position fermée.

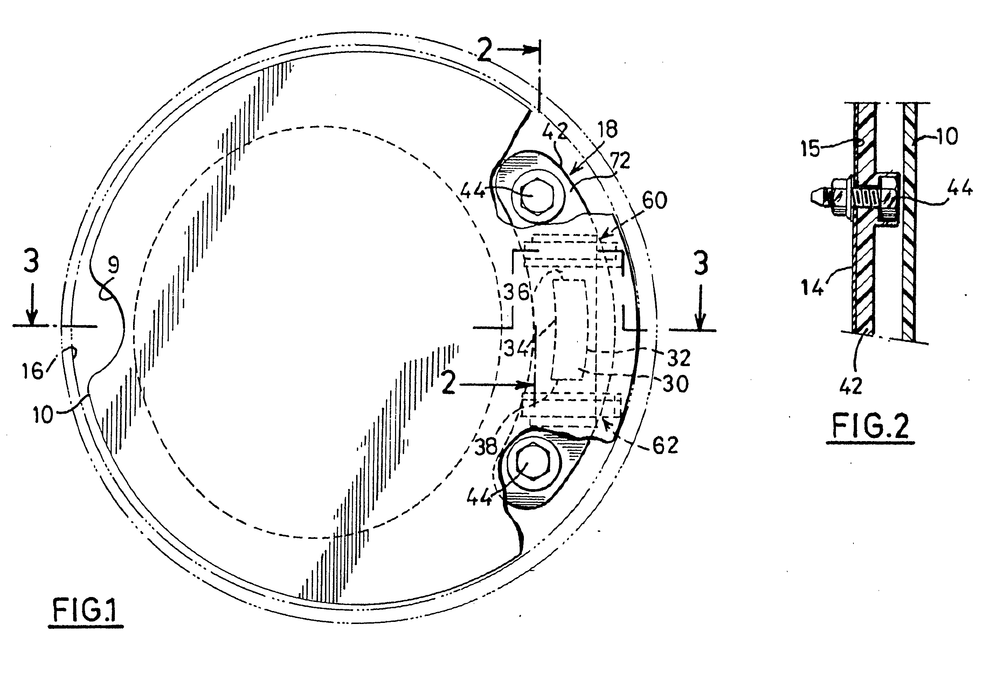

On a représenté aux figures 1 à 4 un mécanisme de trappe à essence pour véhicule automobile qui comprend un portillon 10 articulé sur la carrosserie 12 du véhicule et dont il masque en position fermée une portion emboutie 14. La portillon 10 possède un contour circulaire dont le diamètre correspond à celui de la portion emboutie 14 qui est délimitée par un flanc cylindrique 16. La portion emboutie 14 est prévue pour recevoir l'extrémité du tube d'alimentation du réservoir d'essence sur lequel est vissé un bouchon de fermeture (non représentés).

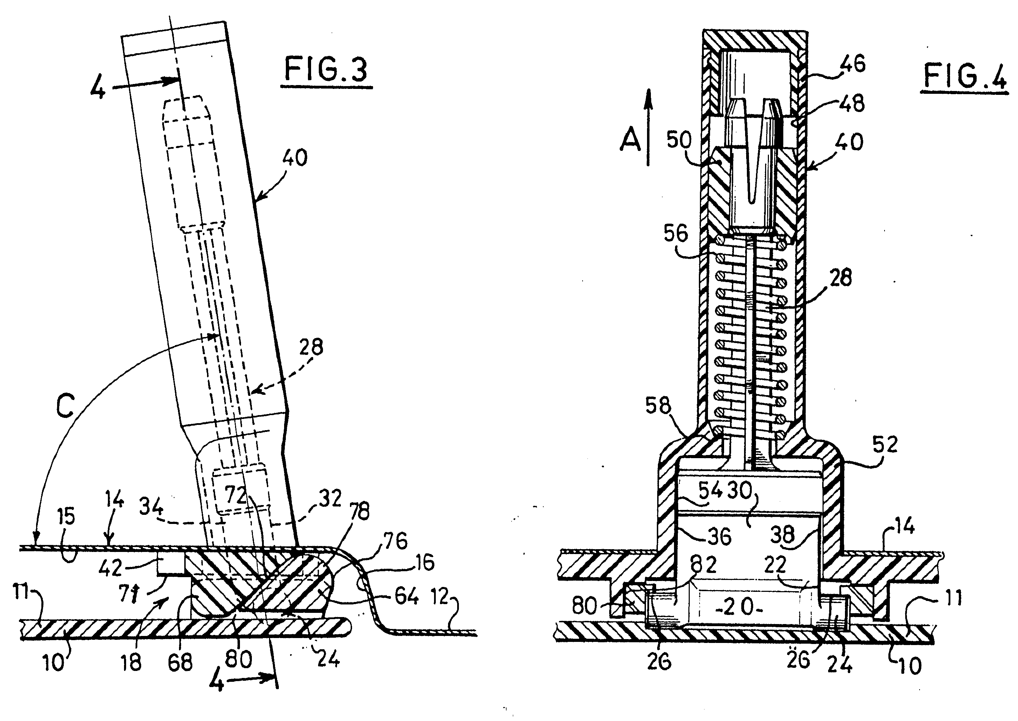

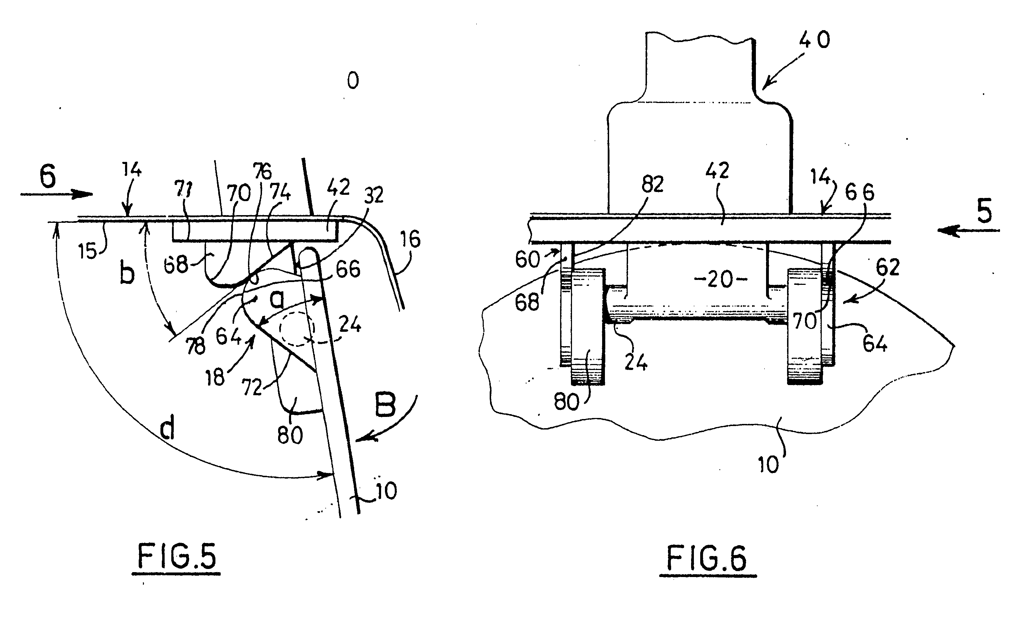

Le portillon 10 est articulé sur la carrosserie au moyen d'un dispositif d'articulation 18 à deux positions privilégiées. Les deux positions privilégiées sont les positions fermée et ouverte du portillon 10 (représentées aux figures 3 et 5, dans lesquelles ce dernier doit être maintenu élastiquement en position, d'une part pour éviter toute vibration et tout battement intempestif du portillon lorsque le véhicule roule et d'autre part pour permettre un remplissage aisé du réservoir.

Le dispositif d'articulation 18 comprend un coulisseau 20 dont l'extrémité 22 est articulée sur le portillon 10 au moyen d'un axe 24, venu de matière avec le coulisseau 20. Les extrémités de l'axe 24 qui est perpendiculaire à l'axe général du coulisseau 20 sont emboîtées à force dans des logements 26 formés à la face interne 11 du portillon 10 de façon que ce dernier soit monté à rotation autour de l'axe 24.

Le corps du coulisseau 20 comprend une première partie cylindrique 28 prolongée par une seconde partie 30 à l'extrémité de laquelle est formée l'axe 24 et dont le profil externe présente deux faces arrondies 32 et 34 en vis-à-vis délimitées par deux bords latéraux 36 et 38.

Le coulisseau 20 est reçu en coulissement dans un fourreau de guidage 40. Le fourreau 40 est fixé sur la portion emboutie 14 de la carrosserie au moyen d'une bride de fixation 42 venue de matière avec le fourreau 40. La bride 42 est fixée sur la face externe 15 de la portion emboutie 14 au moyen de deux ensembles vis écrous 44, le corps du fourreau 40 s'étendant, au travers d'une ouverture formée dans la portion emboutie 14, à l'intérieur de la carrosserie 12 du véhicule.

La bride de fixation 42 est fixée sur la partie plane de la portion emboutie 14, cette portion plane s'étendant dans un plan parallèle à celui de la carrosserie environnante 12.

Le corps du fourreau 40 est constitué par une première partie cylindrique 46 dans un alésage 48 de laquelle est guidée et coulisse une bague cylindrique 50 clipsée sur l'extrémité libre de la première partie 28 du coulisseau 20.

Le corps 40 comprend une seconde partie oblongue 52 dans un évidement 54 de laquelle est guidée et coulisse la seconde partie 30 du coulisseau 20, l'évidement 54 possédant bien entendu un profil correspondant à celui de la seconde partie 30.

Le portillon 10 est maintenu élastiquement dans ses deux positions privilégiées au moyen d'un élément élastique 56 disposé entre le coulisseau 20 et la bague 50 pour solliciter élastiquement le dispositif d'articulation 18. L'élément élastique 56 est constitué par un ressort hélicoïdal cylindrique de compression disposé à l'intérieur du fourreau 40. Le ressort 56 est monté comprimé à l'intérieur du fourreau 40 et prend appui d'une part sur la bague 50 clipsée sur le coulisseau 20 et d'autre part sur le fond interne inférieur 58 du fourreau 40. On comprend qu'ainsi le coulisseau 20 est sollicité élastiquement en permanence vers l'intérieur du fourreau 40 dans la direction de la flèche A de la figure 4.

Outre l'articulation du portillon 10 sur l'axe 24 du coulisseau 20, le dispositif d'articulation 18 comprend deux paires de cames 60 et 62 disposées symétriquement de part et d'autre des extrémités de l'axe d'articulation 24 du coulisseau 20 sur le portillon 10.

On décrira maintenant en détail la paire de cames 60, la paire de cames 62 étant identique dans sa structure et dans son fonctionnement.

Une première came 64 est formée sur la face interne 11 du portillon 10 et coopère par son profil 66 avec le profil 70 en vis-à-vis d'une seconde came 68 formée sur la face supérieure 71 de la bride de fixation 42.

Le profil 66 de la première came 64 comporte un premier méplat 72 qui forme un premier angle "a" sensiblement égal à 45° avec le plan du portillon 10 (voir figure 5).

Le profil 70 de la seconde came 68 comporte un second méplat 74 qui forme un second angle "b" sensiblement égal à 45° avec le plan de la bride de fixation 42 et donc avec le plan de la portion emboutie 14. La somme des angles "a" et "b" est donc sensiblement égale à 90° de façon que dans la position fermée illustrée aux figures 1 à 4 les méplats coopèrent entre eux de sorte que le plan du portillon 10 soit parallèle à celui de la portion emboutie 14 et donc à celui de la portion de carrosserie environnante 12.

Le profil 66 de la première came 64 comporte une surface active 76, reliée au premier méplat 72 par une portion de liaison arrondie 78. La surface active coopère avec le second méplat 74 pour définir la position d'ouverture du portillon 10. Dans cette position d'ouverture, la face interne 11 du portillon 10 est en butée sur la face arrondie 32 du profil externe de la seconde partie 30 du coulisseau 20.

De façon à augmenter l'angle d'ouverture du portillon par rapport au plan de la carrosserie environnante 12, l'axe général du fourreau 40 est incliné par rapport au plan de la bride de fixation 42 et donc par rapport au plan de la portion emboutie circulaire d'un angle aigu "c'''" et ce en direction du centre de la portion emboutie 14. Grâce à cette disposition, le plan du portillon, lorsque ce dernier est dans sa position ouverte représentée à la figure 5, forme avec le plan de la portion emboutie 14 un angle obtu "d".

On décrira maintenant le fonctionnement du mécanisme de trappe à essence qui vient d'être décrit.

Lorsque l'opérateur désire procéder à l'ouverture du portillon 10, il exerce sur ce dernier une traction sur le bord externe du portillon grâce à l'encoche 9 prévue à cet effet à l'opposé de l'articulation 18 et dans laquelle on peut introduire un doigt. La traction a pour effet de provoquer concomitamment : une rotation du portillon 10 autour de l'axe 24, un mouvement relatif du profil 66 de la première came 64 sur le profil en vis-à-vis 70 de la seconde came 70 et un coulissement du coulisseau 20 à l'intérieur du fourreau 40 et ce à l'encontre de l'effort élastique exercé par le ressort 56. Ces mouvements se prolongent jusqu'à ce que la face interne 11 du portillon 10 arrive en butée sur la face arrondie 32 comme cela a été décrit plus haut.

Lorsqu'après avoir procédé au remplissage du réservoir, l'opérateur désire refermer le portillon 10 il lui suffit d'appliquer à ce dernier un léger effort dans la direction de la flèche B de la figure 5, cet effort ayant pour effet de vaincre le point dur dû à l'action du ressort 56 et à la coopération de la surface active 76 avec le second méplat 74, dès que le point dur est franchi, le portillon est rappelé élastiquement en position fermée par l'action du ressort de rappel 56 et par la coopération de la portion arrondie 78 de la première came 64 avec le second méplat 74 jusqu'à ce que les deux méplats 74 et 76 soient à nouveau en contact mutuel.

Au cours du pivotement du portillon 10 tant dans le sens de l'ouverture que de la fermeture, toute rotation intempestive de celuici autour de l'axe général de coulissement est empêchée grâce à la coopération entre la portion de section non cylindrique 30 du coulisseau 20 avec la portion de section correspondante 54 du fourreau 40.

Afin d'assurer une bonne coopération des profils 66 et 70 des cames 64 et 68, une joue latérale de guidage 80 est formée sur la face interne 11 du portillon et elle coopère avec la face plane en vis-àvis 82 de la came 64.

Le mécanisme de trappe à essence qui vient d'être decrit permet avantageusement un grand debattement d'un portillon de contour circulaire et ce grâce à une portion emboutie dont la profondeur ne depasse pas 15 mm. Cette profondeur réduite par rapport aux mécanismes de l'art antérieur permet de supprimer une pièce supplémentaire en forme de coupelle, rapportée sur la carrosserie et sur le flanc de laquelle est fixé le mécanisme.

**Revendications**

1. Mécanisme de trappe à essence pour véhicule automobile comprenant un portillon (10) articulé sur la carrosserie (12) du véhicule, dont il masque en position fermée une portion emboutie (14) prévue pour recevoir un bouchon de réservoir, au moyen d'un dispositif d'articulation à deux positions privilégiées (18) correspondant aux positions fermée et ouverte du portillon (10) dans lesquelles ce dernier est maintenu en position par un élément élastique (56) exerçant une contrainte sur ledit dispositif d'articulation (18), caractérisé en ce que le dispositif d'articulation (18) comprend un coulisseau (20) dont une extrémité (22) est articulée au moyen d'un axe (24) sur le portillon (10) et dont le corps est reçu en coulissement dans un fourreau de guidage (40) fixé sur ladite portion emboutie (14) de la carrosserie au moyen d'une bride de fixation (42) et s'étendant à l'intérieur de la carrosserie, lesdites deux positions privilégiées étant définies par la coopération des profils (66,70) en vis-à-vis d'une première came formée (64) sur le portillon (10) et d'une seconde came (68) formée sur la bride de fixation (42), ledit élément élastique (56) étant disposé entre le portillon (10) et le coulisseau (20) pour solliciter lesdits profils en contact mutuel.

2. Mécanisme de trappe à essence selon la revendication 1 caractérisé en ce que ledit élément élastique (56) est un ressort disposé à l'intérieur dudit coulisseau.

3. Mécanisme de trappe à essence selon la revendication 2 caractérisé en ce que ledit ressort (56) est un ressort de compression prenant appui d'une part sur le coulisseau (30) et d'autre part sur le fourreau (58).

4. Mécanisme de trappe à essence selon l'une quelconque des revendications 1 à 3, caractérisé en ce que le profil (66) de ladite première came (64) comporte un premier méplat (72) qui coopère avec un second méplat (74) formé sur le profil (70) de ladite seconde came (68) pour définir ladite position fermée du portillon.

5. Mécanisme de trappe à essence selon la revendication 4 caractérisé en ce que la bride de fixation (42) est fixée sur une partie plane de ladite portion emboutie (14) qui s'étend dans un plan parallèle à celui de la carrosserie environnante (12), ledit premier méplat (72) formant un premier angle (a) avec le plan dudit portillon (10) et le second méplat (74) formant un second angle (b) avec le plan de la bride de fixation (42) tels que la somme desdits premier et second angles (a), (b), soit égale à 90°.

6. Mécanisme de trappe à essence selon la revendication 5 caractérisé en ce que lesdits premier et second angles (a), (b) sont sensiblement égaux à 45°.

7. Mécanisme de trappe à essence selon l'une quelconque des revendications 4 à 6 caractérisé en ce que le profil (66) de ladite première came (64) comporte une surface active (76), reliée audit premier méplat (72) par une portion de liaison arrondie (78), qui coopère avec ledit second méplat (74) pour définir ladite position d'ouverture du portillon (10).

8. Mécanisme selon l'une quelconque des revendications précédentes caractérisé en ce que ledit coulisseau (20) comporte une portion (30) de section non cylindrique qui coulisse dans une portion correspondante (54) du fourreau (40) de façon à empêcher toute rotation intempestive d'un élément par rapport à l'autre.

9. Mécanisme de trappe à essence selon l'une quelconque des revendications 1 à 7, caractérisé en ce que ledit dispositif d'articulation (18) comporte deux paires (60,62) desdites première et seconde cames (64, 68) et qui sont disposées de part et d'autre des extrémités dudit axe d'articulation (24) du coulisseau (20) sur le portillon (10).

10. Mécanisme de trappe à essence selon l'une des revendications 5 à 9 caractérisé en ce que l'axe général de coulissement dudit fourreau (40) est incliné par rapport au plan de ladite bride de fixation (42) de façon à augmenter l'angle d'ouverture du portillon (10).

**Claims**

1. A petrol flap mechanism for a motor vehicle comprising a flap member (10) pivotally mounted to the bodywork (12) of the vehicle, in the closed position masking a recessed portion (14) thereof which is provided to receive a tank cap, by means of a pivot mounting device (18) having two privileged positions corresponding to the closed and opened positions of the flap member (10) in which the latter is held in position by a resilient element (56) applying a force to said pivot mounting device (18), characterised in that the pivot mounting device (18) ccmprises a slider (20) of which an end (22) is pivotally connected by means of a spindle (24) to the flap member (10) and of which the body is slidably received in a guide casing (40) which is fixed to said recessed portion (14) of the bodywork by means of a fixing flange (42) and which extends within the bodywork, said two privileged positions being defined by the co-operation of the shaped portions (66, 70) in facing relationship of a first cam (64) formed on the flap member (10) and a second cam (68) formed on the fixing flange (42), said resilient element (56) being disposed between the flap member (10) and the slider (20) to urge said shaped portions into mutual contact.

2. A petrol flap mechanism according to claim 1 characterised in that said resilient element (56) is a spring disposed in the interior of said slider.

3. A petrol flap mechanism according to claim 2 characterised in that said spring (56) is a compression spring which bears on the one hand against the slider (30) and on the other hand against the casing (58).

4. A petrol flap mechanism according to any one of claims 1 to 3 characterised in that the shaped portion (66) of said first cam (64) comprises a first flat (72) co-operating with a second flat (74) formed on the shaped portion (70) of said second cam (68) to define said closed position of the flap member.

5. A petrol flap mechanism according to claim 4 characterised in that the fixing flange (42) is fixed on a flat part of said recessed portion (14) which extends in a plane parallel to that of the surrounding bodywork (12), said first flat (72) forming a first angle (a) with the plane of said flap member (10) and the second flat (74) forming a second angle (b) with the plane of the fixing flange (42), such that the sum of said first and second angles (a), (b) is equal to 90°.

6. A petrol flap mechanism according to claim 5 characterised in that said first and second angles (a), (b) are substantially equal to 45°

7. A petrol flap mechanism according to any one of claims 4 to 6 characterised in that the shaped portion (66) of said first cam (64) comprises an active surface (76) connected to said first flap (72) by a rounded connecting portion (78), co-operating with said second flap (74) to define said open position of the flap member (10).

8. A mechanism according to any one of the preceding claims characterised in that said slider (20) comprises a portion (30) of noncylindrical section which slides in a corresponding portion (54) of the casing (40) so as to prevent any untimely rotation of one element with respect to the other.

9. A petrol flap mechanism according to any one of claims 1 to 7 characterised in that said pivot mounting device (18) comprises two pairs (60, 62) of said first and second cams (64, 68) and which are disposed on respective sides of the ends of said pivot mounting spindle (24) for mounting the slider (20) on the flap member (10).

A petrol flap mechanism according to one of claims 5 to 9 characterised in that the general line of sliding movement of said casing (40) is inclined with respect to the plane of said fixing flange (42) so as to increase the angle of opening of the flap member (10).

## Patentansprüche

1. Mechanismus eines Tankverschlußdeckels für Kraftfahrzeuge, mit einem Deckel (10), der an einer Fahrzeugkarosserie (12) angelenkt ist, so daß er in geschlossener Stellung eine Aussparung (14) abdeckt, die zur Aufnahme eines Tankverschlusses dient, mittels einer zwei Vorzugsstellungen aufweisenden Gelenkanordnung (18), welche der geschlossenen und der offenen Stellung des Deckels (10) entsprechen und in denen letzterer von einem elastischen Teil (56) gehalten wird, daß die Gelenkanordnung (18) mit einer Kraft beaufschlagt, dadurch gekennzeichnet, daß die Gelenkanordnung (18) einen Riegel (20) aufweist, deren eines Ende (22) mittels einer Achse (24) am Deckel (10) angelenkt ist und dessen Körper gleitend in eine Führungshülse (40) eingreift, die mittels eines Befestigungsflansches (42) an der Karosserieaussparung (14) befestigt ist und sich ins Karosserieinnere erstreckt, wobei die beiden Vorzugsstellungen bestimmt sind durch das Zusammenwirken von Profilen (66, 70) gegenüber einem ersten Nocken (64) auf dem Deckel (10) und einem zweiten Nocken (68) auf dem Befestigungsflansch (42) und das elastische Teil (56) zwischen dem Deckel (10) und dem Riegel (20) angeordnet ist um die Profile bei gegenseitigem Kontakt zu beaufschlagen.

2. Mechanismus nach Anspruch 1, dadurch gekennzeichnet, daß das elastische Teil (56) eine Feder ist, die im Inneren des Riegels angeordnet ist.

3. Mechanismus nach Anspruch 2, dadurch gekennzeichnet, daß die Feder (56) eine Druckfeder ist, die sich einerseits auf dem Riegel (30) abstützt und andererseits auf der Hülse (58).

4. Mechanismus nach einem der Ansprüche 1 bis 3, dadurch gekennzeichnet, daß das Profil (66) des ersten Nockens (64) eine erste Abflachung (72) aufweist, die mit einer zweiten Abflachung (74) auf dem Profil (70) des zweiten Nockens (68) zusammenwirkt um so die geschlossene Stellung des Deckels zu bilden.

5. Mechanismus nach Anspruch 4, dadurch gekennzeichnet, daß der Befestigungsflansch (42) auf einem ebenen Abschnitt der Aussparung (14) befestigt ist und sich in einer Ebene erstreckt, die parallel zu derjenigen der umgebenden Karosserie (12) ist, daß die erste Abflachung (72) einen ersten Winkel (a) mit der Ebene des Deckels (10) bildet und daß die zweite Abflachung (74) einen zweiten Winkel (b) mit der Ebene des Befestigungsflansches (42) derart bildet, daß die Summe des ersten und des zweiten Winkels (a, b) gleich 90° ist.

6. Mechanismus nach Anspruch 5, dadurch gekennzeichnet, daß der erste und der zweite Winkel (a, b) im wesentlichen gleich 45° betragen.

7. Mechanismus nach einem der Ansprüche 4 bis 6, dadurch gekennzeichnet, daß das Profil (66) des ersten Nockens (65) eine wirksame Fläche (76) aufweist, die mit der ersten Abflachung (72) mittels eines abgerundeten Verbindungsabschnitts (78) verbunden ist, der mit der zweiten Abflachung (74) zusammenwirkt um die offene Stellung des Deckels (10) zu bilden.

8. Mechanismus nach einem der vorhergehenden Ansprüche, dadurch gekennzeichnet, daß der Riegel (20) einen Abschnitt (30) mit nichtzylindrischem Querschnitt aufweist, der in einem entsprechenden Abschnitt (54) der Hülse (40) derart gleitet, daß jede ungewollte Verdrehung der Teile zueinander verhindert wird.

9. Mechanismus nach einem der Ansprüche 1 bis 7, dadurch gekennzeichnet, daß die Gelenkanordnung (18) zwei Paar (60, 62) erster und zweiter Nocken (64, 68) aufweist, die beidseits der Enden der Gelenkachse (24) des Riegels (20) am Deckel (10) angeordnet sind.

10.Mechanismus nach einem der Ansprüche 5 bis 9, dadurch gekennzeichnet, daß die allgemeine Gleitachse der Hülse (40) geneigt ist bezüglich der Ebene des Befestigungsflansches (42), derart, daß der Öffnungswinkel des Deckels (10) vergrößert ist.

FIG.1

FIG.2

0 124 410

FIG.3

FIG.4

0 124 410

FIG.5

FIG.6

0 124 410